# EUROPÄISCHE PATENTSCHRIFT

(11) **EP 0 507 893 B1**
(45) Veröffentlichungstag und Bekanntmachung des Hinweises auf die Patenterteilung: **29.11.1995**
(21) Anmeldenummer: 91913808.1
(22) Anmeldetag: 05.08.1991
(51) Int. Cl.: H02B 1/052

(54) **VORRICHTUNG ZUR SCHNELLBEFESTIGUNG VON ELEKTRISCHEN REIHENEINBAUGERÄTEN**
DEVICE FOR THE RAPID SECURING OF ELECTRICAL SERIES BUILT-IN UNITS
DISPOSITIF POUR LA FIXATION RAPIDE D'APPAREILS ELECTRIQUES A ENCASTRER EN SERIE

(30) Priorität: 29.10.1990 DE 4034307
(43) Veröffentlichungstag der Anmeldung: 14.10.1992
(73) Patentinhaber: HEINRICH KOPP AG, D-63796 Kahl (DE)
(72) Erfinder: FLOHR, Peter, D-8756 Kahl (DE)
(74) Vertreter: Reinhard - Skuhra - Weise & Partner
(86) Internationale Anmeldenummer: DE9100634
(87) Internationale Veröffentlichungsnummer: WO9208264

(56) Entgegenhaltungen:
- DE-A- 2 639 544
- DE-A- 2 717 216
- DE-A- 2 946 622
- DE-U- 7 522 267
- DE-U- 7 533 059
- DE-U- 7 609 710
- FR-A- 2 443 789

## Beschreibung

Die Erfindung betrifft eine Vorrichtung zur lösbaren Schnellbefestigung von Gehäusen elektrischer Reiheneinbaugeräte, wie Schutzschalter, Treppenlichtautomaten und dergleichen an einer profilierten Montageschiene gemäß dem Oberbegriff des Patentanspruchs 1.

Mit derartigen Vorrichtungen soll die Möglichkeit geschaffen werden, Schutzschalter, Treppenlichtautomaten, Steuergeräte und dergleichen, die in Hausverteilungen und dergleichen stationär zusammengefaßt sind, schnell und einfach individuell zu montieren oder zu demontieren, wobei die Reiheneinbaugeräte im schnell befestigten Zustand für die Elektroinstallation und Bedienbarkeit lagesicher gehaltert werden müssen.

Aus dem GM 75 22 267 ist bereits eine Schaltergerätebefestigung der eingangs genannten Gattung bekannt, bei dem in einer Seitenplatine des Schaltgerätes ein zweiarmiges Greifelement schwenkbar gelagert ist, das einen hakenförmigen Arm aufweist, der für das Hintergreifen der Montageschiene vorgesehen ist, und das einen längeren an der Platine in zwei unterschiedlichen Ausnehmungen mit einem Ansatz einsetzbaren Arm aufweist. Nachteilig ist an dieser vorbekannten Vorrichtung, daß für deren Funktion eine spezielle Gestaltung der Seitenplatine des Reiheneinbaugerätegehäuses erforderlich ist und daß die Handhabung dieser vorbekannten Vorrichtung nicht frontal, sondern nur an der Platinenseite möglich ist. Hierdurch scheidet der Einsatz dieser Vorrichtung für seriell nebeneinander angeordnete Reiheneinbaugeräte aus.

Der Erfindung liegt die Aufgabe zugrunde, eine Vorrichtung der eingangs genannten Gattung verfügbar zu machen, die aufgrund ihres Aufbaus einfach zu handhaben ist.

Erfindungsgemäß wird diese Aufgabe durch die im Kennzeichen des Patentanspruchs 1 genannten Merkmale gelöst. Bevorzugte Merkmale, die die Erfindung vorteilhaft weiterbilden, sind den nachgeordneten Patentansprüchen zu entnehmen.

In vorteilhafter Weise schafft die Erfindung somit ein einteiliges und aufgrund seiner Gestaltung in sich elastisches Kopplungselement, das problemlos in die Außenkontur des Reiheneinbaugerätes eingesetzt und dann zuverlässig für eine lösbare Schnellbefestigung desselben an der Montageschiene dient, wobei das Kopplungselement sowohl in der Befestigungsstellung als auch in der Nichtbefestigungsstellung an einer passenden Gehäuseanformung materialelastisch verrastbar ist. Auch das Lösen der Schnellbefestigung ist außerordentlich einfach, da hierfür lediglich eine manuelle Verschiebung des Reiheneinbaugerätes relativ zu der Montageschiene gegen die hintergreifende Rastnase des Kopplungselements erforderlich ist, wobei das Kopplungselement dann aus seiner die Schnellbefestigung sichernden Raststellung ausrastet. Dabei wird eine frontale Handhabung durch das abgewinkelte Betätigungsende des Betätigungsabschnitts ermöglicht.

Die bevorzugt an der Innenseite der Schenkel des Kopplungselements angeordneten Zapfenansätze lassen sich vorteilhaft in vorhandene gehäuseseitige Lagerbohrungen einschnappen, wobei bevorzugt die Zapfenansätze zur Montageerleichterung in Aufsteckrichtung abgeschrägt ausgebildet sind. Hierdurch läßt sich das Kopplungselement an dem Gehäuse in einfacher Weise und "unverlierbar" anlenken.

Für die materialelastische Verrastung des Kopplungselements an dem Gehäuse in der Befestigungsstellung ist nach einer bevorzugten weiteren Ausgestaltung das Kopplungselement nahe dem Betätigungsende innenseitig mit zwei Rastnocken versehen, die in einen passenden außen gelegenen Vorsprung des Gehäuses einrastbar sind.

Nach einer weiteren Ausgestaltung der Erfindung ist an den Schenkeln des Kopplungselements eine Rastausnehmung vorgesehen, durch die das Kopplungselement in seiner Nichtbefestigungsstellung an einer anderen passenden Gehäuseanformung verrastbar ist.

Nachfolgend wird die Erfindung unter Bezugnahme auf die beigefügten Figuren näher erläutert. Es zeigen:

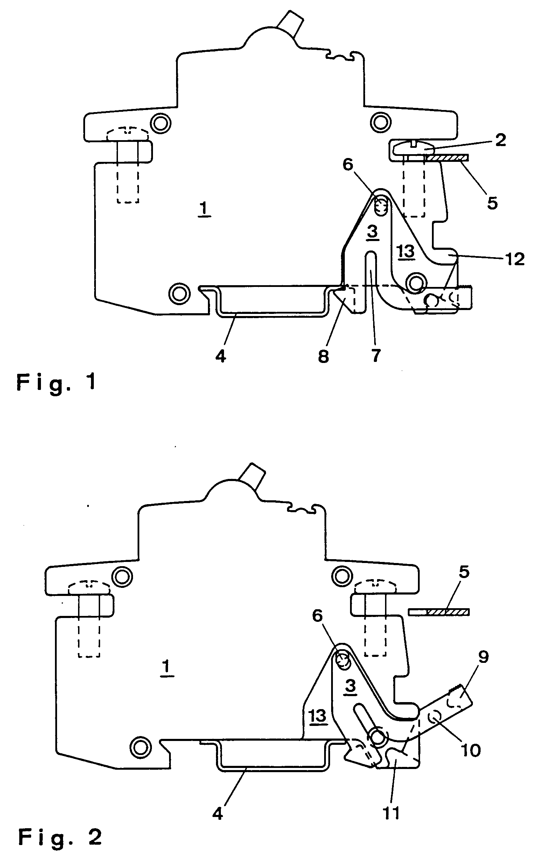

- Fig. 1: eine schematisierte Seitenansicht eines Reiheneinbaugerätes in Befestigungsstellung an einer profilierten Montageschiene unter Verwendung eines Ausführungsbeispiels einer erfindungsgemäßen Vorrichtung zur lösbaren Schnellbefestigung; und
- Fig. 2: das in Fig. 1 gezeigte Reiheneinbaugerät in gelöstem Zustand nach seitlicher Verschiebung relativ zu der Montageschiene.

Wie aus den Figuren ersichtlich, läßt sich ein Reiheneinbaugerät mit seinem Gehäuse 1 durch ein daran unterhalb einer der Anschlußklemmen 2 vorgesehenes Kopplungselement 3 auf einer gemeinsamen Montageschiene 4 befestigen und im Anschlußbereich - parallel zu derselben - elektrisch mit einer Sammelschiene 5 verbinden.

Dabei hat das Kopplungselement 3 die Form eines U-Bügels aus Kunststoff, welcher an seinen Schenkeln zum Einhängen in beidseitige Lagerbohrungen 6 des Gehäuses 1 mit hakenförmigen Zapfenansätzen versehen ist. Des weiteren besitzt das Kopplungselement 3 einen rahmenartig erweiterten Verbindungssteg und eine bis in die Schenkel reichende Schlitzung 7 sowie ein das Profil der Montageschiene 4 gleitfähig übergreifendes Rastende 8, wobei ferner ein mit dem Gehäuse 1 in den Endstellungen des Kopplungselements 3 verriegelbares Betätigungsende 9 vorgesehen ist. Hierzu ist dieses Betätigungsende 9 der langlochartig erweiterten Lagerstelle 6 gegenüber in sich gefedert abgewinkelt und mit beidseitig nach innen reichenden Rastnocken 10 zum Einrasten in zwei korrespondierende Einbuchtungen 11 auf Seiten des Gehäuses 1 versehen. Andererseits ist oberseitig an den Schenkeln eine Rastausnehmung für die Halterung des Kopplungselements 3 in seiner Nicht-Befestigungsstellung an einem außengelegenen Gehäusevorsprung 12 vorgesehen.

Dementsprechend läßt sich das Kopplungselement 3 im Zuge seiner Montage einfach von unten her mit den dazu abgeschrägten Zapfenansätzen an den Schenkelenden elastisch über die ggf. zusätzlich angefaste Gehäuseunterkante schieben und in die Lagerbohrungen 6 einhängen, um dem Kopplungselement 3 danach in Grenzen von an den beiden außenseiten des Gehäuses 1 vorhandenen Wandungsausnehmungen 13 verschwenkbar zu halten und eine Verriegelung an der Montageschiene 4 und zugleich am Gehäuse (10/11) selbst, sowie aus dieser Stellung heraus die Entriegelung unter Freigabe der Montageschiene 4 und der Sammelschiene 5 im Bereich der Anschlußklemme 2 des Einbaugeräts zu ermöglichen. Das Kopplungselement 3 wird dabei auch in dieser Endstellung (bei 12) lösbar am Gehäuse 1 gehalten.

## Patentansprüche

1. Vorrichtung zur lösbaren Schnellbefestigung von Gehäusen elektrischer Reiheneinbaugeräte, wie Schutzschalter, Treppenlichtautomaten und dgl. an einer profilierten Montageschiene, bestehend aus einem an dem Gehäuse (1) über Zapfenansätze anlenkbaren Kopplungselement (3), das ein Rastende mit einer die Montageschiene (4) in der Befestigungsstellung hintergreifenden Rastnase und einen Betätigungsabschnitt aufweist, der an dem Gehäuse (1) in der Befestigungsstellung des Elements (3) materialelastisch verrastbar ist,
**dadurch gekennzeichnet,**
daß das Kopplungselement (3) die Form eines U-Bügels mit Schenkeln und einem rahmenartig erweiterten Verbindungssteg besitzt,
wobei der Betätigungsabschnitt ein Betätigungsende (9) aufweist, das bezüglich des Rastendes (8) abgewinkelt ist.

2. Vorrichtung nach Anspruch 1, dadurch gekennzeichnet, daß die Zapfenansätze an der Innenseite der Schenkel des Kopplungselements (3) angeordnet sind.

3. Vorrichtung nach Anspruch 1 oder 2, dadurch gekennzeichnet, daß das Kopplungselement (3) auf das Gehäuse (1) aufsteckbar ist, wobei die Zapfenansätze zur Montageerleichterung in Aufsteckrichtung abgeschrägt ausgebildet sind.

4. Vorrichtung nach einem der vorangehenden Ansprüche, dadurch gekennzeichnet, daß das Kopplungselement (3) nahe dem Betätigungsende (9) innenseitig zwei Rastnocken (10) aufweist.

5. Vorrichtung nach einem der vorangehenden Ansprüche, dadurch gekennzeichnet, daß an den Schenkeln des Kopplungselements (3) eine Rastausnehmung (20) vorgesehen ist, durch die das Kopplungselement (3) in seiner Nicht-Befestigungsstellung an einer passenden Gehäuseanformung (12) verrastbar ist.

## Claims

1. A device for rapid releasable attachment of housings of electrical serially-mounted apparatuses, such as safety switches, automatic staircase-lighting-systems and the like to a profiled mounting rail,
comprising
a coupling member (3) being pivotable by means of projecting with pins on a housing (1) of the apparatus, said coupling member (3) having an engagement end (8) with an engagement nose gripping said mounting rail (4) from behind in an attached position and an activating portion which is inherently resiliently lockable on the housing (1) in the attached position of said coupling member (3)
**characterized in that**
said coupling member (3) has the form of a U-shaped arc provided with legs and a frame-like extended connector web,
wherein said activating portion comprises an activating end (9) being angeled relative to said engagement end (8).

2. A device according to claim 1
**characterized in that**
said pins are disposed on the inner side of the legs of said coupling member (3).

3. A device according to claim 1 or 2
**characterized in that**
said coupling member (3) is attachable to said housing (1), with said pins being bevelled in the direction of attachment thus facilitating the mounting.

4. A device according to any one of the preceding claims
**characterized in that**
said coupling member (3) comprises two locking cams (10) on the inner side close to said activating end (9).

5. A device according to any one of the preceding claims
**characterized in that**
the legs of said coupling member (3) are provided with a concavity (20) by means of which said coupling member (3) is engageable in its not attached position to with a suitable housing projection (12).

## Revendications

1. Dispositif pour la fixation rapide et détachable de boîtiers d'appareils électriques montés en série, tels que des interrupteurs de protection, des interrupteurs automatiques d'éclairage d'escaliers, etc., sur un rail de montage profilé,
se composant d'un élément d'accouplement (3) qui peut être articulé sur le boîtier (1) au moyen d'appendices-tourillons et qui présente une extrémité d'encliquetage avec un ergot d'encliquetage qui, dans la position de fixation, saisit par derrière le rail de montage (4), et une partie de manoeuvre qui, dans la position de fixation de l'élément (3), peut être enclenchée sur le boîtier (1) par élasticité de la matière,
caractérisé en ce que l'élément d'accouplement (3) a la forme d'un étrier en U avec des branches et une traverse de jonction élargie en cadre,
la partie de manoeuvre présentant une extrémité de manoeuvre (9) qui est coudée par rapport à l'extrémité d'encliquetage (8).

2. Dispositif selon la revendication 1, caractérisé en ce que les appendices-tourillons sont situés du côté interne des branches de l'élément d'accouplement (3).

3. Dispositif selon la revendication 1 ou 2, caractérisé en ce que l'élément d'accouplement (3) peut être emboîté sur le boîtier (1), les appendices-tourillons étant réalisés sous forme biseautée dans la direction d'emboîtement pour faciliter le montage.

4. Dispositif selon l'une quelconque des revendications 1 à 3, caractérisé en ce que l'élément d'accouplement (3) présente deux saillies d'encliquetage (10) du côté interne, à proximité de l'extrémité de manoeuvre (9).

5. Dispositif selon l'une quelconque des revendications 1 à 4, caractérisé en ce qu'il est prévu, sur les branches de l'élément d'accouplement (3), un creux d'encliquetage (20) par lequel l'élément d'accouplement (3) peut être enclenché, dans sa position de non-fixation, sur une formation correspondante (12) du boîtier.
